# EUROPEAN PATENT APPLICATION

(11) **EP 4 151 392 A1**
(43) Date of publication of application: **22.03.2023**
(21) Application number: 21461594.0
(22) Date of filing: 15.09.2021
(51) Int. Cl.: B29C 64/153, B29C 64/227, B29C 64/379, B22F 10/14, B22F 10/28, B22F 12/20, B22F 12/00, B22F 12/33, B22F 12/82, B22F 12/88, B29C 35/16, B33Y 10/00, B33Y 30/00, B33Y 40/20

(54) **A PBF PRINTER WITH A BED EJECTING MECHANISM**

(71) Applicant: Sinterit Sp. z o.o., 30-741 Krakow (PL)
(72) Inventor: KOBUS, Konrad, Krakow (PL); OBARA, Michal, Wieliczka (PL); KLIMIUK, Robert, Losice (PL)
(74) Representative: Kancelaria Eupatent.pl Sp. z.o.o

(57) **Abstract**

A powder bed fusion (PBF) printer, comprising: a housing with a printing chamber (10); an energy source (20); and a printing bed (30) for a printed object. The printer further comprises: a cooling unit (50) for cooling the printed object, wherein the cooling unit (50) is located outside the printing chamber (10); and an ejecting mechanism (60) for moving the printing bed (30) with the printed object from the printing chamber (10) to the cooling unit (50) and for moving the printing bed (30) from the cooling unit (50) back to the printing chamber (10).

## Description

### TECHNICAL FIELD

The disclosed invention relates to a Powder Bed Fusion (PBF) printer with a bed ejecting mechanism.

### BACKGROUND

Powder Bed Fusion (PBF) 3D printing technique enables the manufacturing of a vast array of geometrically complex products using an energy source, such as laser or electron beams, to fuse powder particles layer-by-layer, therefore forming a solid part. There are different known techniques for printing 3D objects, by the PBF additive manufacturing process, for which different types of PBF 3D printers are used such as: Selective Laser Sintering (SLS) in which plastic powder is sintered, Selective Laser Melting (SLM) and Electron Beam Melting (EBM) in which metal powder is melted.

For example the Selective Laser Sintering (SLS) uses a laser as a power source to sinter a powdered material (typically polyamide), aiming the laser automatically at points in space defined by a 3D model, thereby binding the material together to create a solid structure (a three-dimensional object).

A conventional SLS printer comprises a support (called a "bed") for a printed object, on which a recoating roller spreads a thin layer of powder, which is subsequently sintered by means of a laser according to layers sliced from a 3D model file.

Afterwards, a platform with the bed moves down by a distance equal to a thickness of a single layer and the process repeats until the last layer of the printed object is formed. After the printing process is finished, the produced three-dimensional object is cooled down and removed from an unsintered powder suspension. The unsintered powder can be used for the next printing process.

For example, a US patent application US20180319081A1 discloses a removable build module (a printing bed) for additive fabrication devices, in particular for selective laser sintering printers. With the build module being removable from the printer, the object being fabricated may be cooled, processed, and removed from the fabrication chamber outside of the selective laser sintering printer, allowing for the fabrication of additional objects by the printer while the object is cooling. There is no mechanism disclosed that would facilitate removal of the produced module. Therefore, a typical solution could be to use some of the known forklifts designed for such purpose, for example such as the forklift disclosed in a Chinese publication CN204400542U.

A European patent EP2275247B1 discloses an apparatus for generatively producing three-dimensional objects layer by layer under the action of electromagnetic radiation, in particular an SLS printer, comprising a radiation source (for example a laser) and two mutually separated constructional regions (printing beds) for objects to be produced. After the printing process is finished, the operator needs to wait until the objects are cooled down, while the printing device is not operating at the time.

### SUMMARY OF THE INVENTION

There is a need to provide an improved PBF printer which allows a more efficient handling of produced objects, such as to allow easy removal of the object from the bed and reduce the time between printing different objects.

The invention relates to a powder bed fusion (PBF) printer comprising a housing with a printing chamber; an energy source; and a printing bed for a printed object. The printer further comprises a cooling unit for cooling the printed object, wherein the cooling unit is located outside the printing chamber; and an ejecting mechanism for moving the printing bed with the printed object from the printing chamber to the cooling unit and for moving the printing bed from the cooling unit back to the printing chamber.

In the powder bed fusion (PBF) printer, the object is printed by sintering or melting the consecutively applied layers of powder by means of an energy source. The energy source used for processing the powder, in particular sintering or melting, may for example have a form of a laser source or electron beam emitter (gun).

The cooling unit allows to avoid prolonged stoppages of the printing machine related to the time needed for the object to cool down. Thus, after the printing job is finished, the printing bed can be moved from the printing chamber to the cooling unit, by means of an ejecting mechanism. During the cooling process of the already printed object, a new printing job may be started.

Such an approach helps to use the available printing resources to a bigger extend, by significantly decreasing time by which the printing machine remains stopped.

The cooling unit may comprise a cooling chamber located above the printing bed and a cutting blade for cutting off a cake from the printing bed. As a result the printing machine may start a new printing job while the previously printed object is still in the cake and being cooled down within the cooling chamber.

The ejecting mechanism may comprise an ejector for moving the printing bed in the horizontal direction, at least one guide rail for guiding the printing bed in the horizontal direction, a first blocking pin for blocking the horizontal movement of the printing bed inside the printing chamber, a second blocking pin for blocking the horizontal movement of the printing bed inside the cooling unit, a lifting mechanism for moving the printing bed in the vertical axis. Preferably, the ejector has a form of a scissor arm, which provides a high ratio of displacement range to the retracted position.

The lifting mechanism may comprise a first pair of arms located at the first side of the printing bed and a second pair of arms located at the second side of the printing bed, wherein the arms in each pair are pivotally connected with each other.

The arms in each pair can be pivotally connected with each other in the middle of their length.

The lifting mechanism can be coupled with the ejector at a pivotal axes of the arms and wherein upper ends of the arms are coupled pivotally to the printing bed and upper ends of the arms are coupled pivotally and slidably to the printing bed.

The lifting mechanism may comprise a first pair of bearings, wherein each bearing of the first pair is located at the bottom end of the arms in the first pair of arms and is located in the first guide rail, and a second pair of bearings wherein each bearing of the second pair is located at the bottom end of the arms in the second pair of arms and is located in the second guide rail.

The preferred construction of the ejecting mechanism allows to use only one transferring mechanism (the ejector) for performing both the horizontal and the vertical movement of the printing bed. Therefore, the design is greatly simplified as no additional actuators are needed for performing the vertical movement.

The invention also relates to a method of printing an object by means of a powder bed fusion (PBF) printer as described herein, the method comprising performing a printing job to produce the object on a printing bed within a printing chamber by powder bed fusion printing. Before performing the printing job, a base layer of powder is deposited onto the printing bed, wherein the base layer has a thickness greater than a thickness of a cutting blade. The method further comprises, after the printing job is finished: ejecting the printing bed from the printing chamber to the cooling unit by means of the ejecting mechanism; and moving the printing bed back from the cooling unit to the printing chamber by means of the ejecting mechanism.

The base layer of powder has a thickness greater than a thickness of the cutting blade and the method may further comprise moving the piston up inside the printing bed to push the cake up from the printing bed to the cooling chamber of the cooling unit; and cutting off the cake by means of the cutting blade.

The method may further comprise the steps of: before ejecting the printing bed from the printing chamber, moving the printing bed downwards to unseal it from the printing chamber, by means of a lifting mechanism; and after ejecting the printing bed from the printing chamber to the cooling unit, moving the printing bed upwards to seal it with the cooling chamber, by means of the lifting mechanism.

The method may further comprise the steps of: after cutting off the cake by means of a cutting blade, moving the printing bed downwards to unseal it from the cooling chamber, by means of the lifting mechanism; and after moving the printing bed back from the cooling unit to the printing chamber, moving the printing bed up to seal it with the printing chamber, by means of the lifting mechanism.

These and other features, aspects and advantages of the invention will become better understood with reference to the following drawings, descriptions and claims.

### BRIEF DESCRIPTION OF DRAWINGS

The disclosed invention is shown by means of preferred embodiments in a drawing, wherein:
Fig. 1 presents a selective laser sintering (SLS) printer with a bed ejecting mechanism in a side view;

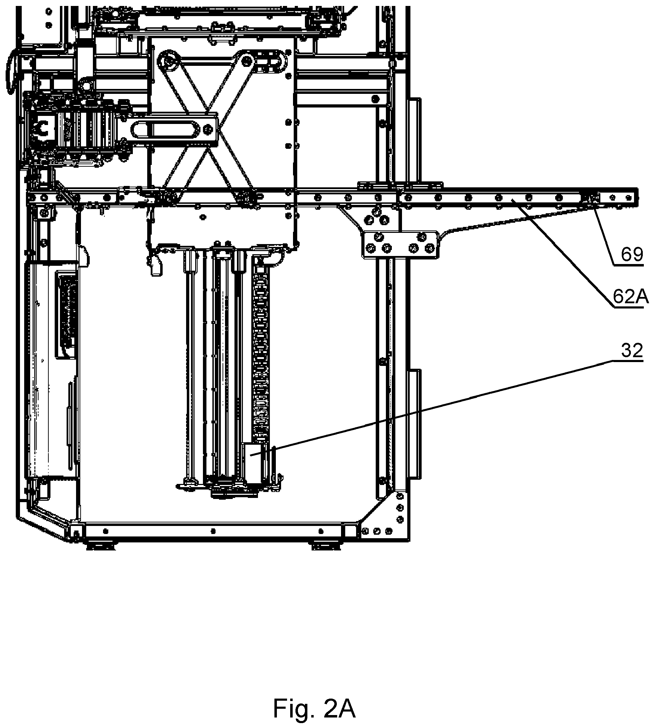

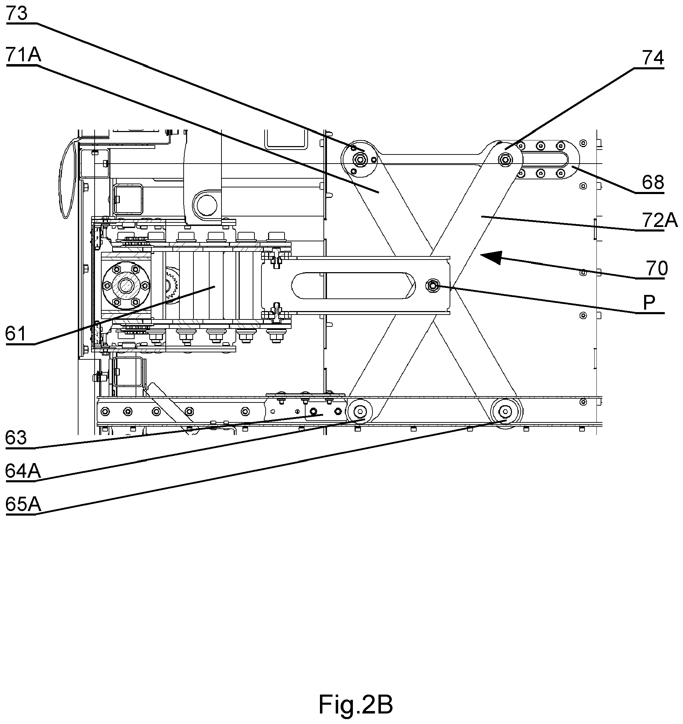

Fig. 2A-2B present details of the ejecting mechanism;

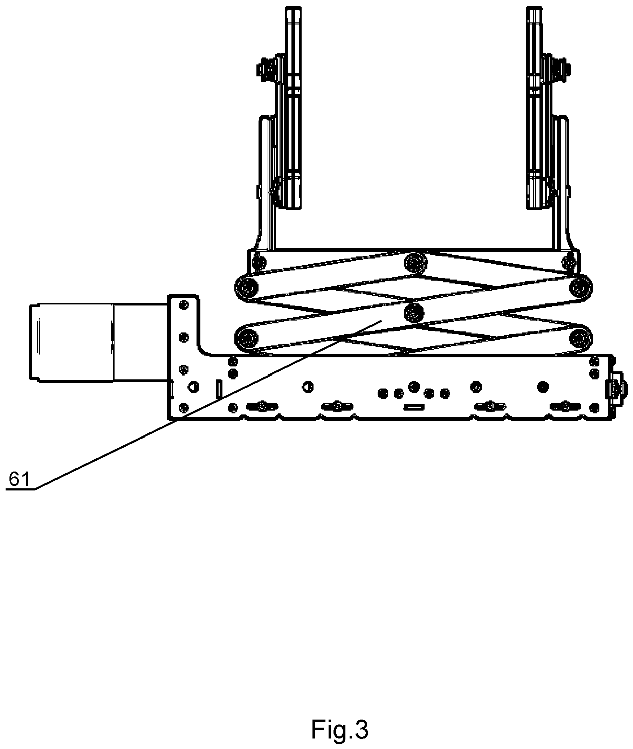

Fig. 3 presents an ejector in a top view;

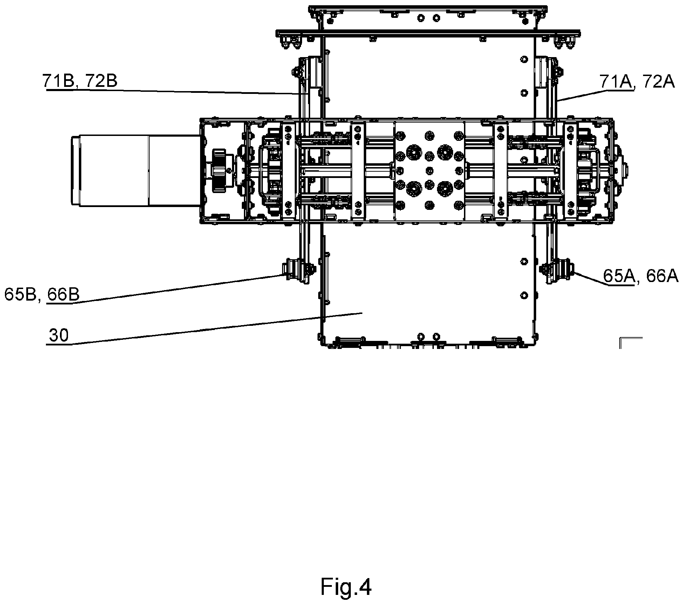

Fig. 4 presents the ejecting mechanism in a side view.

### DETAILED DESCRIPTION OF EMBODIMENTS

The description presented herein is not to be taken in a limiting sense, but is made merely for the purpose of illustrating the general principles of the invention.

The following detailed description relates to a Selective Laser Sintering (SLS) printer but it can be equivalently applied to other types of PBF printers as well, in particular to Selective Laser Melting (SLM) or Electron Beam Melting (EBM).

The embodiment presented herein contains all features foreseen by the present disclosure. However, other embodiments are feasible as well that do not contain all features necessary to achieve particular technical advantages corelated with such feature.

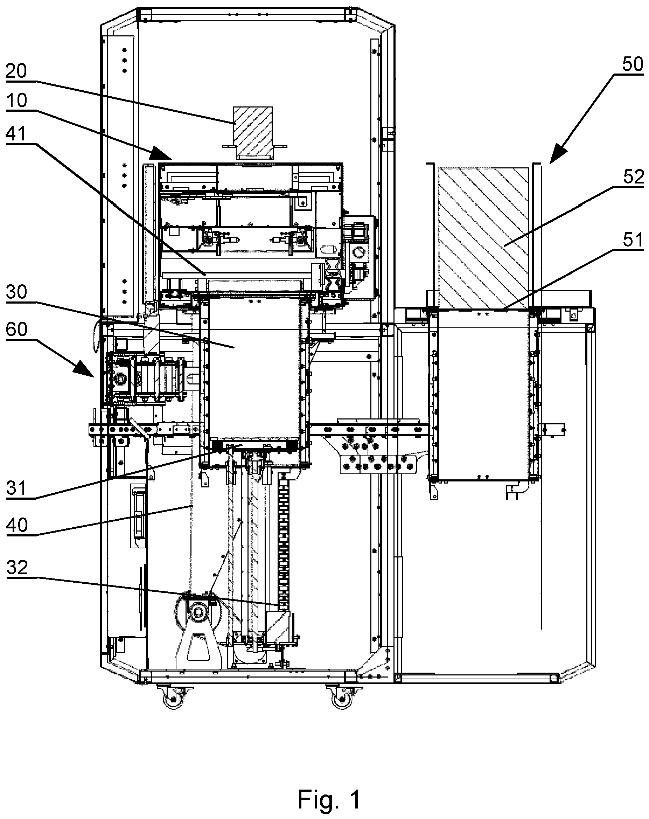

The SLS printer, as shown in Fig. 1, has a housing with a printing chamber 10. A laser 20 is used as an energy source for sintering. The object being printed is supported by a printing bed 30.

The object being printed is housed in the printing bed 30 on a primary layer of unsintered powder. The printing bed 30 has a form of a cylinder with a movable piston 31 therein. After sintering the first layer of powder, a driving unit 32 for driving the piston 31 moves the piston 31 downwards by a distance equal to the thickness of the powder layer. Then the powder is deposited from a powder container 40 directly (or indirectly by means of additional conveying mechanisms) onto the printing bed 30 in front of a powder distribution unit 41. The powder distribution unit 41 creates a uniform layer of unsintered powder on the previously sintered layer. Subsequently, the newly deposited layer is sintered by means of a laser source according to layers sliced from a 3D model file. The printing process is performed in a sealed environment of the printing chamber 10, wherein the temperature inside the printing chamber may reach 180 °C. Therefore after the printing job is finished the printed object needs to be cooled down, before it is taken out from a cake (the cake is formed by the printed object itself surrounded by the unsintered powder), to avoid its cracking or buckling/deforming.

A cooling unit 50 located outside the printing chamber 10 is provided for cooling the printed object.

The printer comprises an ejecting mechanism 60 for moving the printing bed 30 with the printed object from the printing chamber 10 to the cooling unit 50 and for moving the printing bed 30 from the cooling unit 50 back to the printing chamber 10.

The cooling unit 50 comprises a cooling chamber 52 located above the printing bed 30 and a cutting blade 51 for cutting off a cake from the printing bed 30.

Thus, after the printing job is finished the printing bed 30 is moved from the printing chamber 10 to the cooling unit 50, by means of an ejecting mechanism 60. During the cooling process of the already printed object, a new printing job may be started.

After the printing bed 30 is transferred to the cooling unit 50 the cake is pushed upwards and away from the printing bed 30 into the cooling chamber 52, by means of the piston 31. Thereafter the cutting blade 51 which is horizontally slidable at the bottom end of the cooling chamber 52, projects through the cake through a region of unsintered powder located below the printed object. The cutting blade 51 has a form of a plate and after cutting off the cake it forms a bottom of the cooling chamber 52, thereby preventing the cake to fall down when the printing bed 30 is moved back to the printing chamber 10. Therefore after closing the cooling chamber 52 by means of the cutting blade 51, the piston 31 may be lowered and the printing bed 30 may be moved from the cooling unit 50 to the printing chamber 10 by means of the ejecting mechanism 60. The cutting blade 52 may be operated manually by the operator or may be controlled by an additional pushing mechanism.

In the presented example embodiment, the ejecting mechanism 60 comprises an ejector 61 in a form of a scissor arm, for moving the printing bed 30 in the horizontal direction. A pair of guide rails 62A, 62B guide the printing bed 30 in the horizontal direction. A first blocking pin 63 blocks the horizontal movement of the printing bed 30 inside the printing chamber 10. A second blocking pin 69 blocks the horizontal movement of the printing bed 30 inside the cooling unit 50.

Furthermore, a lifting mechanism 70 is provided for moving the printing bed 30 in the vertical axis. The extreme positions of the printing bed 30 are defined by the first blocking pin 63 and the second blocking pin 69.

The lifting mechanism 70 is configured to move the printing bed 30 slightly up to make an airtight connection between the printing bed 30 and the printing chamber 10 and when the printing bed 30 is inside the cooling unit 50 to make the airtight connection between the printing bed 30 and the cooling chamber 52. In order to move the printing bed 30 from the printing chamber 10 to the cooling unit 50 and vice-versa, the lifting mechanism moves the printing bed 30 slightly downwards in order to unseal it from the chamber present above (either the printing chamber 10 or the cooling chamber 52).

The lifting mechanism 70 comprises a first pair of arms 71A, 72A located at the first side of the printing bed 30 and a second pair of arms 71B, 72B located at the second side of the printing bed 30. The arms 71A, 72A, 71B, 72B in each pair are pivotally connected with each other in the middle of their length.

The lifting mechanism 70 is coupled with the ejector 61 at a pivotal axes P of the arms 71A, 72A, 71B, 72B. The upper ends 73 of the arms 71A, 71B are coupled pivotally to the printing bed 30. The upper ends 74 of the arms 72A, 72B are coupled pivotally and slidably to the printing bed 30.

The lifting mechanism 70 comprises a first pair of bearings 65A, 66A, each bearing being located at the bottom end of the arms 71A, 72A in the first pair of arms and being located in the first guide rail 62A. A second pair of bearings 65B, 66B is located at the bottom end of the arms 71B, 72B in the second pair of arms and is located in the second guide rail 62B.

The upper ends 74 of the arms 72A, 72B are coupled pivotally and slidably to the printing bed 30. The sliding movement of the upper ends 74 is provided by means of a slider 68. When the printing bed 30 reaches its second extreme position in the cooling unit 50 the bearings 65A, 65B abut the second blocking pin 69 and the corresponding blocking pin located in the second guide rail 62B. By maintaining the progressive movement of the ejector 61 the arms 71A, 72A and 71B, 72B in each pair tend to approach each other (they pivot about the pivotal axes P, thereby pushing the printing bed 30 upwards until it reaches the cooling chamber 52. On the other hand when the retracting movement of the ejector 61 is established, first the arms 71A, 72A and 71B, 72B in each pair tend to move away from each other, thereby lowering the printing bed 30. An equivalent situation takes place when the printing bed 30 reaches its first extreme position in the printing chamber 10. Then the bearing 64A and 64B abut the first blocking pin 63 and the corresponding blocking pin located in the second guide rail 62B, and by further retraction of the ejector 61 the arms 71A, 72A and 71B, 72B in each pair tend to move towards each other, thereby pushing the printing bed upwards until it contacts the printing chamber 10 and connects to it in an air-tight manner.

The printer operates as follows. Before performing a printing job, a base layer of powder is deposited onto the printing bed 30. The base layer has a thickness greater than a thickness of the cutting blade 51. Then, after the printing job is finished, the printing bed 30 is moved downwards to unseal it from the printing chamber 10, by means of the lifting mechanism 70. Next, the printing bed 30 is ejected from the printing chamber 10 to a cooling unit 50 by means of the ejecting mechanism 60. The printing bed 30 is moved upwards to seal it with the cooling chamber 52, by means of the lifting mechanism 70. The piston 31 is moved up inside the printing bed 30 to push the cake up from the printing bed 30 to the cooling chamber 52 of the cooling unit 50. Next, the cake is cut off by means of the cutting blade 51. The printing bed 30 is moved downwards to unseal it from the cooling chamber 52, by means of the lifting mechanism 70. Finally, the printing bed 30 is moved back from the cooling unit 50 to the printing chamber 10 by means of the ejecting mechanism 60 and the printing bed 30 is lifted up to seal it with the printing chamber 10, by means of the lifting mechanism 70.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A powder bed fusion (PBF) printer, comprising:
- a housing with a printing chamber (10);
- an energy source (20); and
- a printing bed (30) for a printed object;
**characterized in that** it further comprises:
- a cooling unit (50) for cooling the printed object, wherein the cooling unit (50) is located outside the printing chamber (10); and
- an ejecting mechanism (60) for moving the printing bed (30) with the printed object from the printing chamber (10) to the cooling unit (50) and for moving the printing bed (30) from the cooling unit (50) back to the printing chamber (10).

2. The PBF printer according to claim 1, wherein the cooling unit (50) comprises a cooling chamber (52) located above the printing bed (30) and a cutting blade (51) for cutting off a cake from the printing bed (30).

3. The PBF printer according to claim 1 or 2, wherein the ejecting mechanism (60) comprises an ejector (61) for moving the printing bed (30) in the horizontal direction, at least one guide rail (62A, 62B) for guiding the printing bed (30) in the horizontal direction, a first blocking pin (63) for blocking the horizontal movement of the printing bed (30) inside the printing chamber (10), a second blocking pin (69) for blocking the horizontal movement of the printing bed (30) inside the cooling unit (50), a lifting mechanism (70) for moving the printing bed (30) in the vertical axis.

4. The PBF printer according to claim 3, wherein the lifting mechanism (70) comprises a first pair of arms (71A, 72A) located at the first side of the printing bed (30) and a second pair of arms (71B, 72B) located at the second side of the printing bed (30), wherein the arms (71A, 72A, 71B, 72B) in each pair are pivotally connected with each other.

5. The PBF printer according to claim 4, wherein the arms (71A, 72A, 71B, 72B) in each pair are pivotally connected with each other in the middle of their length.

6. The PBF printer according to claim 4 or 5, wherein the lifting mechanism (70) is coupled with the ejector (61) at a pivotal axes (P) of the arms (71A, 72A, 71B, 72B) and wherein upper ends (73) of the arms (71A, 71B) are coupled pivotally to the printing bed (30) and upper ends (74) of the arms (72A, 72B) are coupled pivotally and slidably to the printing bed (30).

7. The PBF printer according to any of claims 4 to 6, wherein the lifting mechanism (70) comprises a first pair of bearings (65A, 66A), wherein each bearing of the first pair is located at the bottom end of the arms (71A, 72A) in the first pair of arms and is located in the first guide rail (62A), and a second pair of bearings (65B, 66B) wherein each bearing of the second pair is located at the bottom end of the arms (71 B, 72B) in the second pair of arms and is located in the second guide rail (62B).

8. A method of printing an object by means of a powder bed fusion (PBF) printer according to any of previous claims, the method comprising performing a printing job to produce the object on a printing bed within a printing chamber by powder bed fusion printing;
**characterized in that** the method further comprises the steps of:
- before performing the printing job, depositing a base layer of powder onto the printing bed (30); and
- after the printing job is finished:
- ejecting the printing bed (30) from the printing chamber (10) to the cooling unit (50) by means of the ejecting mechanism (60); and
- moving the printing bed (30) back from the cooling unit (50) to the printing chamber (10) by means of the ejecting mechanism (60).

9. The method of printing according to claim 8, wherein the base layer of powder has a thickness greater than a thickness of the cutting blade (51) and the method further comprises:
- moving the piston (31) up inside the printing bed (30) to push the cake up from the printing bed (30) to the cooling chamber (52) of the cooling unit (50); and
- cutting off the cake by means of the cutting blade (51).

10. The method of printing according to any of claims 8 to 9, further comprising the steps of:
- before ejecting the printing bed (30) from the printing chamber (10), moving the printing bed (30) downwards to unseal it from the printing chamber (10), by means of a lifting mechanism (70); and
- after ejecting the printing bed (30) from the printing chamber (10) to the cooling unit (50), moving the printing bed (30) upwards to seal it with the cooling chamber (52), by means of the lifting mechanism (70).

11. The method of printing according to any of claims 9 to 10 further comprising the steps of:
- after cutting off the cake by means of a cutting blade (51), moving the printing bed (30) downwards to unseal it from the cooling chamber (52), by means of the lifting mechanism (70); and
- after moving the printing bed (30) back from the cooling unit (50) to the printing chamber (10), moving the printing bed (30) up to seal it with the printing chamber (10), by means of the lifting mechanism (70).
